(19) Europäisches Patentamt
European Patent Office
Office européen des brevets

(11) Publication number: **0 020 000**
**B1**

(12) # EUROPEAN PATENT SPECIFICATION

(45) Date of publication of patent specification: **15.06.83**

(21) Application number: **80301179.0**

(22) Date of filing: **14.04.80**

(51) Int. Cl.³: **C 07 C 69/675,**
C 08 F 20/10, C 08 F 22/10,
C 07 C 103/66,
C 07 C 103/38,
C 07 C 103/64,
C 07 C 69/66,
C 07 C 103/30,
C 07 C 103/58

(54) **Activated ester monomers, polymers formed therefrom and coating compositions containing said polymers.**

(30) Priority: **29.05.79 US 43522**

(43) Date of publication of application:
**10.12.80 Bulletin 80/25**

(45) Publication of the grant of the patent:
**15.06.83 Bulletin 83/24**

(84) Designated Contracting States:
**DE FR GB IT NL SE**

(56) References cited:
DE - A - 2 338 755
DE - B - 1 194 146
GB - A - 972 070
GB - A - 1 103 916
GB - A - 1 108 383
GB - A - 1 242 980
GB - A - 1 461 750
US - A - 2 701 809
US - A - 3 285 886

(73) Proprietor: **AMERICAN CYANAMID COMPANY**
**Berdan Avenue**
**Wayne New Jersey 06904 (US)**

(72) Inventor: **Schirmann, Peter Jude**
**89 Eunice Avenue**
**Fairfield Connecticut (US)**
Inventor: **Parekh, Girish Girdhar**
**11 Four Seasons Drive**
**Fairfield Connecticut (US)**
Inventor: **Blank, Werner Josef**
**36 Grey Rocks Road**
**Wilton Connecticut (US)**

(74) Representative: **Allam, Peter Clerk et al,**
**LLOYD WISE, TREGEAR & CO. Norman House**
**105-109 Strand**
**London WC2R 0AE (GB)**

(56) References cited
**CHEMICAL ABSTRACTS, vol. 75, no. 8, August 23, 1971, page 44, no. 50182e. Columbus, Ohio, USA**
**KOZAI, YASUAKI et al. "Natural rubber. XI. Graft copolymerization of methacryloylglycine and its esters onto natural rubber"**

**EP 0 020 000 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

(56) References cited:

**CHEMICAL ABSTRACTS, vol. 74, no. 12, March 22, 1971, page 3, no. 54229c, Columbus, Ohio, USA**
**YONEZAWA, MASAJI et al. "Syntheses and polymerization of alkoxycarbonylmethyl acrylates"**

# Activated ester monomers, polymers formed therefrom and coating compositions containing said polymers

This invention relates to ethylenically unsaturated monomers which contain activated ester groups. These monomers are useful to prepare polymers with other ethylenically unsaturated monomers, which are useful in the preparation of coatings and adhesives for metals, woods, textiles and paper, and in the preparation of moldings. The resultant polymers are readily cross-linked by reaction with compounds containing at least two primary or secondary amine groups, and the present invention further relates to the resultant cross-linked product.

Previously attempts at preparing coatings had centred on using commercially available polymers and developing novel cross-linking agents for use therewith, ie U.S. Patents 3,519,627 and 4,026,855 for example.

Alternatively, prior attempts to prepare polymers, useful with conventional diamines, had been directed to isocyanate and/or epoxide technology. However, these coatings have considerable drawbacks to their commercial use in that the ingredients are highly toxic, or are difficult to handle, or cannot be tailor-made to a sufficient degree to make a family of coatings useful for multiple purposes.

U.S. patent 3,422,139 describes the use of acrylamidoglycolic acid as a comonomer useful in coatings.

Although the use of activated esters in the preparation of regular copolyamides is well known in the literature, c.f. Ogata et al (Polymer Journal at Vol. 5, p. 186—194, Vol. 6, p. 412—418, Vol. 7, p. 72—78, and Vol. 10, p. 499—504; J. Polymer Science Vol. 14, p. 783—792; and others), these compounds were copolymerized through the ester groups. There has been no attempt to produce monomers wherein the activated ester remains available for subsequent cross-linking with commercially available polyamines.

The present invention provides compounds of the formula:

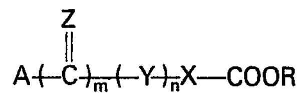

wherein A is an organic group containing a polymerizable vinyl linkage selected from:

$$CH_2{=}CH—,\ CH_2{=}C(CH_3)—,\ CH_2{=}CH—O—,$$

and

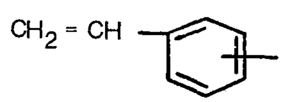 ;

Z is selected from O and S; m and n are integers and each is 0 or 1; Y is a bridging unit selected from:

$$—OCH_2CH_2—,\ —OCH_2(CH_3)CH_2—,\ OCH_2CH_2OCH_2CH_2—,$$

$$O—CH_2CH_2CO—,\ —NHCH_2—,\ —NH—,$$

$$—NHCOCH_2CH_2—, \text{ and } —NHCH_2CH_2CH_2—;$$

X is selected from

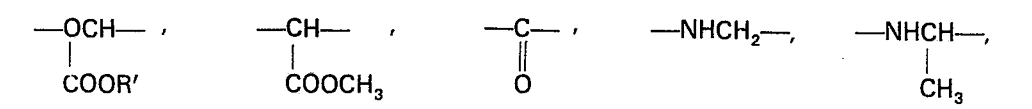

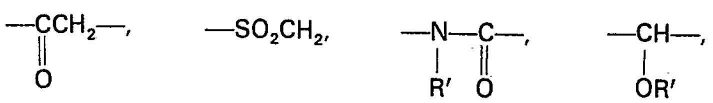 and 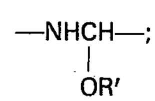

wherein R′ is an alkyl group with 1—8 carbon atoms; and R is selected from alkyl groups with 1—8 carbon atoms, cycloalkyl groups with 5—8 carbon atoms and cycloheteroalkyl groups with 5—8 carbon atoms, each of which groups is optionally substituted with one or more groups selected from heteroatoms, $NO_2$, ether, halogen, alcohol, nitrile and amide groups; with the proviso that when n is 0, R is an alkyl group with 1—8 carbon atoms and A is $CH_2{=}CH—$ or $CH_2{=}C(CH_3)—$, then X cannot be $—NHCH_2—$ or $—NHCH(CH_3)—$.

This —X—COOR group may be either directly linked to the group containing the polymerizable vinyl linkage (ie group A in the formula above) or it may be linked through the bridging unit Y. The precise nature of this bridging unit has been found to have essentially no influence on the reactivity of the ester groups on the monomers of the present invention. Thus, the use of a bridging unit Y and/or the particular unit chosen is basically one of convenience in preparing the monomers.

The exact nature of R which acts as a leaving group during cross-linking of the resultant coating by the action of an amine, has been found to be relatively insignificant so long as it is not too bulky to prevent the approach of the amine. Thus, R can be an alkyl group with 1—8 carbon atoms, a cycloalkyl group with 5—8 carbon atoms, or a cycloheteroalkyl group containing 5—8 atoms in the ring. These groups may be substituted with heteroatoms, $NO_2$ groups, ethers, halogens, alcohols, nitriles, and amides. Thus, R may be derived from alcohols such as methanol, ethanol, propanol, 2-nitroethanol, 2-chloroethanol, 2-cyanoethanol, ethyleneglycol, propyleneglycol, monoalkoxyethanols, furfuryl, alcohol, tetrahydrofurfuryl alcohol, tetrahydropyran-2-methanol, tetrahydropyran-3-ol, thioethanol and other similar compounds. Most preferably R is selected from methyl, ethyl, propyl, isopropyl, butyl, isobutyl, t-butyl, optionally containing a hydroxyl group.

The C=Z group may be present or absent depending upon the starting compound which is converted into the activated ester monomer herein. When C=Z is present, A is generally a group such as acryl or methacryl. When C=Z is not needed to make the monomer, A is such as styryl.

Suitable monomers within the scope of the present invention include such as:

Methyl acrylamidoglycolate
Methyl acrylamidoglycolate methyl ether
Methyl methacryloxyacetate
Ethyl acrylamido-N-oxalate (N-ethyloxalyl acrylamide)
N,N'-Bis(ethyloxalyl)acrylamide
N-isopropyl, N-ethyloxalyl-3-propylamino methacrylamide
N-Ethyloxalyl-N'-methyleneaminoacrylamide
Ethyl N-2-ethyloxamatoacrylate
Ethyl 3-pyruvylacrylate
Ethyl methlenepyruvate
Methyl acrylthiocarbonyloxyacetate (Methyl thiacryloxyacetate)
Methyl thiacrylthioglycolate
Methyl acryl-2-thioglycolate
Methyl thiacrylamidoacetate
Methyl acrylamidoglycolate thioether
Methyl acrylamido-N-methylenethioglycolate
p-Ethyl oxalyl styrene.

Other alkyl groups may be substituted for the methyl or ethyl groups in the above-named compounds.

The activated ester monomers herein may be prepared by standard synthetic methods well known to the art such as esterification, condensation, addition, elimination and other such reactions depending upon the particular monomer to be prepared. The reactions are carried out using conventional acidic or basic catalysts as needed and under conventional reaction conditions. For example, the alkylacrylamidoglycolate alkyl ethers may be prepared by esterifying and etherifying acrylamidoglycolic acid with the desired alcohol or mixture of alcohols; alkyl acryloxyacetates may be prepared by condensing an amine salt of the acrylic acid and an alkyl haloacetate. Alkyl N-$\omega$-alkylozamatoacrylate and N-alkyl-N-alkyloxalylaminoacrylamides and methacrylamides may be prepared by the condensation reaction of an appropriate acid chloride such as alkyl oxalyl chloride or acryloyl chloride with the desired alcohol or amine such as $\omega$-hydroxyalkyloxalate or alkylaminoalkyl-acrylamide. Other compounds may be similarly prepared.

Optionally the monomers may be transesterified with diols such as ethylene glycol and propylene glycol.

The monomers may be polymerized with other vinyl monomers, according to conventional vinyl polymerization techniques using conventional initiators, temperatures, and other reaction conditions. Generally the polymerization is performed in the presence of an inert organic solvent such as ethylacetate, or tetrahydrofuran, or a reactive solvent such as butanol and the like, so that in either case the resultant polymer is ready for use in a coating. The polymer must contain at least 2, and preferably 3 or more, activated ester groups per polymer chain so that crosslinking may be achieved.

The polymers so produced may be cured by reaction with compounds containing at least two primary or secondary amine groups per molecule at temperatures from as low as room temperature to 200°C. in a period of less than about 30 minutes, though longer times may be needed at the lower temperatures.

The primary or secondary amine groups must be available for entering into the curing reaction with the activated ester of the monomer. Generally, this means that they are pendantly attached to a

compound. For purposes of this invention, pendant amine groups include terminal amine groups, as well as those attached to the compound or to a side chain thereon.

Suitable compounds containing amine groups useful herein include such as:

1,2-ethylenediamine
1,3-propylenediamine
1,2-butylenediamine
1,4-butylenediamine
1,6-hexamethylenediamine
1,7-heptanediamine
diethylenetriamine
xylyldiamine
4,7-dioxadecan-1,10-diamine
1,2-diaminocyclohexane
Bis(p-aminocyclohexyl)methane
2,2-Bis(4-aminocyclohexyl)propane
N,N-Bis(3-aminopropyl)methylamine
Bis(hexamethylenetriamine)

Alternatively, the amine containing compound may be a polymer which contains at least about 1% by weight of pendant amine groups.

Representative polymers containing pendant amine groups can be derived from epoxy and epoxy-modified diglycidyl ethers of bisphenol A structures, various aliphatic polyethylene or polypropylene glycol (diglycidyl ether) adducts, and glycidyl ethers of phenolic resins, such epoxy resins being commercially available and commonly used in the electrocoating field.

Other useful polymers containing pendant amine groups include polyamide resins, for example, condensation products of dimerized fatty acids coreacted with difunctional amine, such as ethylene diamine. Polyamide resins generally are those having a molecular weight between about 500 and 5,000. Further useful polymers containing pendant amine groups include acrylic resins having molecular weight of about 1,000 to about 1,000,000 or more, polyester resins and polyurethane resins both having a molecular weight range of about 500 to about 5,000, and vinyl resins.

Generally, the cross-linking agent is used in an amount to provide a ratio of activated ester groups to amine groups of about 0.3/1 to 3/1.

Coating compositions based upon the activated ester monomer of the present invention may contain, in addition to the polymer and the polyamine curing agent, conventional coatings additives such as antioxidants, heat stabilizers, flow control agents, pigments, surface active agents, anticorrosion agents, catalysts, and solvents.

To further illustrate the present invention, the following non-limiting examples are offered wherein all parts and percents are by weight unless otherwise specified.

Example 1

Preparation of Methyl Acrylamidoglycolate Methyl Ether (MAGME)

To a three-necked flask equipped with a stirrer and an extractor filled with a molecular sieve drying agent was added 300 parts acrylamidoglycolic acid, 3000 parts methanol, 0.05 parts phenothiazine, 4.5 parts 98% sulfuric acid and 200 parts chloroform. The mixture was heated to reflux and the distillate was allowed to pass through the extractor for 6 1/2 hours. The mixture was cooled and allowed to stand for 16 hours at which point the mixture was warmed to about 40°C., 19 g of sodium carbonate was added, and the solution was stirred for 2 1/2 hours. The mixture was filtered and vacuum stripped of solvent. The solid residue was extracted with chloroform. Diethyl ether was added to the extract and a polymeric mass precipitated which was discarded. The remaining extract was stripped of solvent to yield 264.2 parts of crude MAGME which was confirmed by chemical analysis.

Example 2

Preparation of Ethyl Methacryloxyacetate (EMA)

To a flask equipped with a stirrer was added 172.8 parts methacrylic acid and 202 parts triethylamine. This mixture was allowed to stir for 5 min. To this was added 245 parts ethyl chloroacetate. The reactants were heated to 60°C. and the exotherm carried the temperature up to 100°C. The temperature was kept between 90—97°C. by cooling for 1/2 hour after which heat was supplied to hold the temperature at 90° for 1 hour. The mixture was cooled and filtered. This crude product was distilled at 65.5—66°C. at 0.1 cm to yield 318 g of pure EMA as confirmed by chemical analysis.

Example 3

Preparation of Butyl Acrylamidoglycolate Butyl Ether (BAGBE)

One hundred parts of acrylamidoglycolic acid (AGA); 517 parts butanol, 1 part concentrated sulfuric acid and 0.1 part monomethyl ether of hydroquinone were mixed in a flask equipped with a

Dean Stark water trap and a stirrer. The mixture was heated until homogeneous. After 5—10 minutes 100 ml of toluene was added and the mixture was brought to reflux and held 5 hours until the theoretical amount of water was collected by azeotrope.

The toluene and excess butanol were removed under vacuum to yield 173 parts crude BAGBE, as confirmed by chemical analysis.

Example 4

Preparation of Ethyl Acrylamidoglycolate Ethyl Ether (EAGEE)

Eighteen parts of acrylamidoglycolic acid (AGA), 250 parts ethanol, 0.27 parts sulfuric acid and 0.018 g of monomethylether of hydroquinone were added to a flask and the mixture was refluxed for 1 1/2 hours. Toluene (300 parts) was added and the azeotrope was collected and tested for water content. The solvent mixture was replenished and the azeotrope collected until the theoretical amount of water was taken off (4.5 parts). The solvent was then removed under vacuum to yield 24.9 parts crude EAGEE which crystallized readily on standing and was identified by chemical analysis.

Example 5

Preparation of Acrylamidoglycolic acid Methyl Ether (AGME)

45 parts of acrylamidoglycolic acid, 90 parts trimethylorthoformate, 0.045 parts of the mono methyl ether of hydroquinone and 35 parts of methanol are mixed in a flask equipped with a stirrer, condensor and thermometer. The mixture was heated at a bath temperature of 60—65°C. for 24 hours. A small amount of insoluble material was filtered off and discarded. The filtrate was stripped of solvent under vacuum and a rubbery substances was obtained. This material was extracted with ether with stirring for 3 days. The solid which was insoluble in the ether was filtered off and was further extracted with acetone. The acetone was removed to yield 24 g of crude AGME (Mp. 100—102.5).

Example 6

Following the procedure of Example 1, the following additional monomers are prepared:

Methyl acrylamidoglycolate ethyl ether
Ethyl acrylamidoglycolate methyl ether
Cyclohexyl acrylamidoglycolate cyclohexyl ether

Example 7

Preparation of Ethyl N-2-ethyloxamatoacrylate

To a mixture of 500 parts ethanolamine in methylene chloride (900 ml), cooled to −70°C., was added dropwise 2405 parts diethyloxalate. After stirring at room temperature for 16 hours, the mixture was filtered, concentrated and purified by chromatography to yield pure ethyl 2-hydroxyethyloxamate. A mixture of the oxamate (77 parts), sodium carbonate (50.2 parts) and an inhibitor in chloroform were cooled to 0°C and acryloylchloride (43.3 parts) was added dropwise. After stirring at 0° for 2 hours and room temperature for 3 hours the mixture was filtered to yield 1011 parts crude ethyl N-2-ethyloxamatoacrylate.

Example 8

Preparation of Polymer from Ethyl N-2-ethyloxamatoacrylate

One part ethyl N-2-ethyloxamatoacrylate of Example 7 was mixed with 2 parts dioxane and .005 parts azobisisobutyronitrile and was purged with nitrogen. The mixture was heated to 70°C. for 60 minutes and the homopolymer was formed. Four tenths part 1,3-diaminopropane was added to cure the polymer after it had cooled. There was an immediate evolution of heat and the sample solidified indicating rapid crosslinking.

Example 9

Preparation of N-isopropyl-N-ethyl oxalyl-3-aminopropyl methacrylamide (EOMAM)

Sixty-six parts of isopropylaminopropylmethacrylamide was mixed with 400 parts chloroform and 36.4 parts triethylamine. The mixture was cooled to 4°C. and a mixture of ethyl oxalyl chloride (49 parts) in chloroform (100 parts) was added dropwise over 35—45 minutes. The mixture was held at 0—5°C. for 1/2 hour and then warmed to room temperature overnight. The mixture was filtered, stripped and purified by column chromatography to yield N-isopropyl-N-ethyl oxalyl-3-aminopropyl-methacrylamide (99.6 parts). The product was confirmed by chemical analysis.

Example 10

Preparation of Methyl acrylamidoglycolate (MAG)

Acrylamide (141.7 parts), methylglyoxylate (144 parts), acetone (1200 ml) and phenothiazine (0.05 parts) were mixed and heated to reflux for 6 hours. After filtration and crystallization 180 parts MAG were received as confirmed by chemical analysis.

Example 11

Preparation of N-Ethyl oxalyl-N′-methylene aminoacrylamide

Methoxymethyl acrylamide (19.7 parts), ethyl ozamate (40 parts), sulfuric acid (2 parts), methanol (10.9 parts) and chloroform (350 ml) were mixed and refluxed for 32 hours. Excess sodium carbonate was added and the mixture was stirred for 3 days. Filtration, stripping and fractional crystallization yielded 16 parts of the desired product as confirmed by chemical analysis.

Example 12

Preparation N-Ethyl oxalylacrylamide and N,N-Bis(ethyl oxalylacrylamide)

The above monomers are jointly prepared by the condensation reaction of acrylamide with diethyl oxalate or ethyl oxalyl chloride in the presence of potassium tertiary butoxide. The mixture is stirred at room temperature for 1—5 days and the mixed product is purified and each component is separated by chromatography or the mixed product is used to make a polymeric coating.

The present polymers are also useful in the production of moldings and adhesives by conventional procedures well known to those skilled in the art.

**Claims**

1. A compound of the formula:

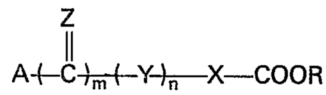

wherein A is an organic group containing a polymerizable vinyl linkage selected from:

$CH_2{=}CH—$, $CH_2{=}C(CH_3)—$, $CH_2{=}CH—O—$, and

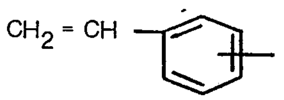;

Z is selected from O and S; m and n are integers and each is 0 or 1; Y is a bridging unit selected from:

$—OCH_2CH_2—$, $—OCH_2(CH_3)CH_2—$, $OCH_2CH_2OCH_2CH_2—$,

$O—CH_2CH_2CO—$, $—NHCH_2—$, $—NH—$,

$—NHCOCH_2CH_2—$, and $—NHCH_2CH_2CH_2—$;

X is selected from

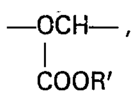, 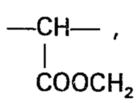, 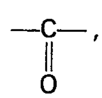, $—NHCH_2—$, 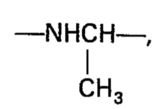,

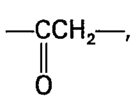, $—SO_2CH_2—$, 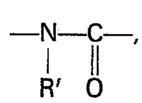, 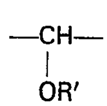 and 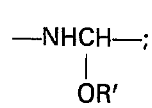;

wherein R′ is an alkyl group with 1—8 carbon atoms; and R is selected from alkyl groups with 1—8 carbon atoms, cycloalkyl groups with 5—8 carbon atoms and cycloheteroalkyl groups with 5—8 carbon atoms, each of which groups is optionally substituted with one or more groups selected from heteroatoms, $NO_2$, ether, halogen, alcohol, nitrile and amide groups; with the proviso that when n is 0, R is an alkyl group with 1—8 carbon atoms and A is $CH_2{=}CH—$ or $CH_2{=}C(CH_3)—$, then X cannot be $—NHCH_2—$ or $—NHCH(CH_3)—$.

2. A compound according to Claim 1, wherein A is an acryl or methacryl group.

3. A compound according to Claim 1 or Claim 2, wherein Z is oxygen and m is 1.

4. A compound according to any preceding claim, which is an alkyl acrylamidoglycolate alkyl ether wherein the alkyl groups are the same or different and have 1—8 carbon atoms.

5. A compound according to any preceding claim, wherein the compound is methyl acrylamidoglycolate methyl ether, ethyl methacryloxyacetate, butyl acrylamidoglycolate butyl ether or ethyl acrylamidoglycolate ethyl ether.

6. A polymer of a compound according to any preceding claim.

7. A coating composition comprising a polymer according to Claim 6 having at least two ester groups per polymer chain and a compound containing at least two primary or secondary amine groups per molecule.

8. A coating composition according to Claim 7, wherein the amine-containing compound is selected from 1,2-ethylenediamine, 1,3-propylenediamine, 1,2-butylenediamine, 1,4-butylenediamine, 1,6-hexamethylenediamine, 1,7-heptanediamine, diethylenetriamine, xylyldiamine, 4,7-dioxadecan-1,10-diamine, 1,2-diaminocyclohexane, bis(*p*-aminocyclohexyl)methane, 2,2-bis(4-aminocyclohexyl)propane, N,N-bis(3-aminopropyl)-methylamine, bis(hexamethylenetriamine), and a polymer containing at least 1% by weight pendant amine groups.

9. The cured product of Claims 7 or 8.

**Revendications**

1. Un composé de formule

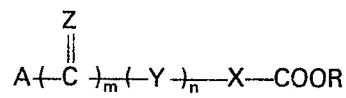

dans laquelle A est un groupe organique contenant une liaison vinyle polymérisable choisi parmi:

$CH_2{=}CH—$, $CH_2{=}C(CH_3)—$, $CH_2{=}CH—O—$, et

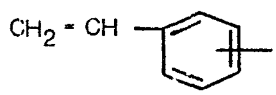

Z est choisi entre O et S, m et n sont des nombres entiers et chacun est 0 ou 1; Y est une unité de pontage choisie parmi:

$—OCH_2CH_2—$, $OCH_2(CH_3)CH_2—$, $OCH_2CH_2OCH_2CH_2—$,

$O—CH_2CH_2CO—$, $—NHCH_2—$, $—NH—$,

$—NHCOCH_2CH_2—$, et $—NHCH_2CH_2CH_2—$

X est choisi parmi;

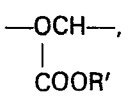, 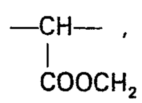, 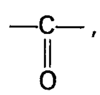, $—NHCH_2—$, 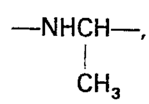,

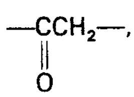, $—SO_2CH_2—$, 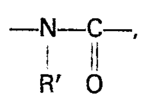, 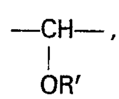, et 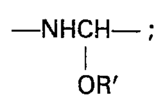;

où R' est un groupe alkyle ayant de 1 à 8 atomes de carbone; et R est choisi parmi les groupes alkyle ayant de 1 à 8 atomes de carbone, les groupes cycloalkyle ayant de 5 à 8 atomes de carbone et les groupes cyclohétéroalkyle ayant de 5 à 8 atomes de carbone, chacun de ces groupes étant éventuellement substitué par un ou plusieurs groupes choisis parmi les hétéroatomes et les groupes $NO_2$, éther, halogéno, alcool, nitrile et amide; à condition que, lorsque n est 0, R' soit un groupe alkyle ayant de 1 à 8 atomes de carbone et A soit $CH_2{=}CH—$ ou $CH_2{=}C(CH_3)—$, X ne pouvant alors pas être $—NHCH_2—$ ou $—NHCH(CH_3)$.

2. Composé selon la revendication 1, dans lequel A est un groupe acrylique ou méthacrylique.

3. Composé selon la revendication 1 ou la revendication 2, dans lequel Z est l'oxygène et m est 1.

4. Composé selon l'une quelconque des revendications précédentes, qui est un éther acrylique d'un acrylamido glycolate d'alkyle dans lequel les groupes alkyle sont identiques ou différents et ont de 1 à 8 atomes de carbone.

5. Composé selon l'une quelconque des revendications précédentes, dans lequel le composé est l'éther méthylique de l'acrylamidoglycolate de méthyle, le méthacryloxyacétate d'éthyle, l'éther butylique de l'acrylamidoglycolate de butyle ou l'acrylamidoglycolate d'éthyle.

6. Polymère d'un composé selon l'une quelconque des revendications précédentes.

7. Composition de revêtement comprenant un polymère selon la revendication 6 ayant au moins

deux groupes ester par chaîne de polymère et un composé contenant au moins deux groupes amine primaire ou secondaire par molécule.

8. Composition de revêtement selon la revendication 7, dans laquelle le composé contenant l'amine est choisi parmi la 1,2-éthylènediamine, la 1,3-propylènediamine, la 1,2-butylènediamine, la 1,4-butylènediamine, la, 1,6-hexaméthylènediamine, la 1,7-heptanediamine, la diéthylènetriamine, la xylyldiamine, la 4,7-dioxadécan-1,10-diamine, le 1,2-diaminocyclohexane, le bis(*p*-aminocyclohexyl)méthane, le 2,2-bis(4-aminocyclohexyl)-propane, la N,N-bis(3-aminopropyl)-méthylamine, la bis(hexaméthylènetriamine), et un polymère contenant au moins 1% en poids de groupes amine pendants.

9. Le produits durci des revendications 7 ou 8.

## Patentansprüche

1. Verbindung der Formel

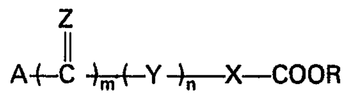

wobei A eine organische Gruppe ist, welche eine polymerisierbare Vinylgruppe enthält und welche ausgewählt ist aus

$CH_2$=CH—, $CH_2$=C($CH_3$)—, $CH_2$=CH—O—, und

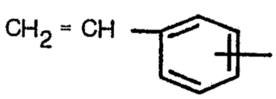 ;

wobei Z O oder S bedeutet und wobei m und n jeweils für 0 oder 1 stehen und wobei Y aus einer der folgenden Brückeneinheiten ausgewählt ist:

—$OCH_2CH_2$—, —$OCH_2(CH_3)CH_2$—, $OCH_2CH_2OCH_2CH_2$—,

O—$CH_2CH_2CO$—, —$NHCH_2$—, —NH—,

—$NHCOCH_2CH_2$—, und —$NHCH_2CH_2CH_2$—;

und wobei X ausgewählt ist aus

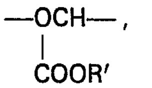 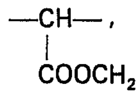 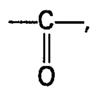 —$NHCH_2$—, 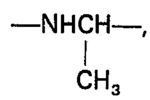

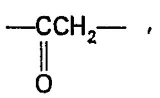 —$SO_2CH_2$—, 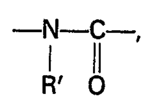 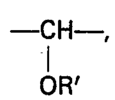 und 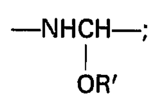

in denen R' eine Alkylgruppe mit 1 bis 8 Kohlenstoffatomen bedeutet und R eine Alkylgruppe mit 1 bis 8 Kohlenstoffatomen, eine Cycloalkylgruppe mit 5 bis 8 Kohlenstoffatomen und eine Cycloheteroalkylgruppe mit 5 bis 8 Kohlenstoffatomen, wobei jede der vorgenannten Gruppen gegebenenfalls substituiert sein kann, und zwar mit einem oder mehreren der folgenden Substituenten: Heteroatome, $NO_2$, Äthergruppen, Halogenatome, Alkoholgruppen, Nitrilgruppen und Amidgruppen; mit der Bedingung, daß X nicht für —$NHCH_2$— oder —$NHCH(CH_3)$— stehen kann, wenn n für 0 steht und R für eine Alkylgruppe mit 1 bis 8 Kohlenstoffatomen steht und A für eine der Gruppen $CH_2$=CH— oder $CH_2$=C($CH_3$)— steht.

2. Verbindung nach Anspruch 1, dadurch gekennzeichnet, daß A für eine Acryl- oder Methacrylgruppe steht.

3. Verbindung nach einem der Ansprüche 1 oder 2, dadurch gekennzeichnet, daß Z für Sauerstoff steht und m für 1.

4. Verbindung nach einem der vorhergehenden Ansprüche, dadurch gekennzeichnet, daß es sich un einen Alkylacrylamidoglykolat-alkyläther handelt, wobei die Alkylgruppen gleich oder verschieden sind und 1 bis 8 Kohlenstoffatome aufweisen.

5. Verbindung nach einem der vorhergehenden Ansprüche, dadurch gekennzeichnet, daß est sich

un den Methylacrylamidoglykolat-methyläther handelt oder um Athyl-methacryloxyacetat oder Butylacrylamidoglykolat-äthyläther oder Äthyl-acrylamidoglykolat-äthyläther.

6. Polymeres einer Verbindung nach einem der vorhergehenden Ansprüche.

7. Beschichtungsmasse, umfassend ein Polymeres nach Anspruch 6 mit mindestens zwei Estergruppen pro Polymerkette sowie eine Verbindung mit mindestens zwei primären oder sekundären Amingruppen pro Molekül.

8. Beschichtungsmasse nach Anspruch 7, dadurch gekennzeichnet, daß die Amingruppen enthaltende Verbindung ausgewählt ist aus 1,2-Äthylendiamin, 1,3-Propylendiamin, 1,2-Butylendiamin, 1,4-Butylendiamin, 1,6-Hexamethylendiamin, 1,7-Heptandiamin, Diäthylentriamin, Xylyldiamin, 4,7-dioxadecan-1,10-diamin, 1,2-Diaminocyclohexan, Bis(*p*-aminocyclohexyl)methan, 2,2-Bis(4-aminocyclohexyl)propan, N,N-Bis(3-aminopropyl)-methylamin, Bis(hexamethylentriamin), Polymeres mit einem Gehalt von mindestens 1 Gew.-% seitenständigen Amingruppen.

9. Gehärtetes Erzeugnis erhalten aus einer der Beschichtungsmassen nach Ansprüchen 7 oder 8.